# EUROPÄISCHE PATENTSCHRIFT

(11) **EP 3 311 695 B1**
(45) Veröffentlichungstag und Bekanntmachung des Hinweises auf die Patenterteilung: **05.06.2019**
(21) Anmeldenummer: 16002259.6
(22) Anmeldetag: 21.10.2016
(51) Int. Cl.: A47B 9/06, A47B 9/20, F16B 7/10

(54) **LÄNGENVERSTELLBARE STÜTZE MIT RASTEINRICHTUNG**
ADJUSTABLE SUPPORT WITH LATCHING DEVICE
SUPPORT AJUSTABLE AVEC SYSTEME DE BLOCAGE

(43) Veröffentlichungstag der Anmeldung: 25.04.2018
(73) Patentinhaber: WINI Büromöbel Georg Schmidt GmbH & Co. KG, 31863 Coppenbrügge (DE)
(72) Erfinder: Möckel, Rico, 31199 Diekholzen (DE)
(74) Vertreter: Samson & Partner Patentanwälte mbB

(56) Entgegenhaltungen:
- DE-A1-102008 028 688
- DE-C1- 19 639 691
- DE-U1- 20 116 625

## Beschreibung

### GEBIET DER ERFINDUNG

Die vorliegende Erfindung bezieht sich allgemein auf eine längenverstellbare Stütze, wie sie insbesondere bei Möbeln zum Einsatz kommt.

### HINTERGRUND DER ERFINDUNG

Es sind allgemein Stützen bzw. Trägerelemente für Möbel bekannt, die auf unterschiedliche Art und Weise höhenverstellbar bzw. längenverstellbar sind. Zum Beispiel gibt es höhenverstellbare Tische oder verschiebbare Auflageflächen, Beistellflächen und dergleichen.

Zur Höhen- bzw. Längsverstellung sind zum Beispiel Rasteinrichtungen bekannt, die teleskopartig ineinander geschobene Stützelemente durch entsprechendes Einrasten in Raststrukturen sicher miteinander verbinden, sodass sie eine vorgegebenen Höhe bzw. Länge einnehmen.

Eine Rasteinrichtung dieses Typs zum Verrasten eines inneren und eines äußeren Teleskopelements ist zum Beispiel aus der europäischen Patentschrift EP 2 080 447 B1 bekannt. Die Rasteinrichtung hat einen Rastschuh mit Rastvorsprüngen, die in Rastaussparungen des inneren Teleskopelements einrasten. Zum Lösen der Rastverbindung kann der Rastschuh durch Betätigen eines Betätigungselements aus den Rastaussparungen gedrückt werden.

Eine ähnliche Rasteinrichtung zum Verrasten eines inneren und eines äußeren Teleskopelements zeigt die deutsche Gebrauchsmusterschrift DE 20 2013 004 212 U1. Hier kann ein Rastschuh mit Rastvorsprüngen durch Ziehen an einem Betätigungselement aus Rastvorsprüngen in dem inneren Teleskopelement entfernt und damit die Rastverbindung zwischen dem inneren und dem äußeren Teleskopelement gelöst werden.

Aus dem Dokument DE 196 39 691 C1 ist ebenfalls eine längenverstellbare Stütze für Möbel bekannt. Diese längenverstellbare Stütze umfasst zwei teleskopartig ineinander verschiebbare Rohre mit einer in diskreten Schritten feststellbaren Arretiereinrichtung. Diese Arretiereinrichtung umfaßt dabei zumindest einen Arretiervorsprung, der in Arretierstellung in eine der mehreren Arretier- und Rastöffnungen im oder am Innenrohr eingreift. Der zumindest eine Arretiervorsprung steht in fester Verbindung mit einem über das Außenrohr überstehenden Betätigungsknopf. Der Betätigungsknopf durchragt dazu eine im Außenrohr eingebrachte Durchtrittsöffnung, in welcher der Betätigungsknopf in Umfangs- und Verstellrichtung unverschiebbar gehalten ist. Der Betätigungsknopf durchragt ferner einen im Innenrohr eingebrachten Längsschlitz, so dass bei Eindrücken des Betätigungsknopfes der zumindest eine mit ihm fest verbundene Arretiervorsprung aus seiner Eingriffslage, in der er in eine der Arretier- oder Rastöffnungen eingreift, heraus verstellbar ist.

Diese bekannten Rasteinrichtungen haben sich als platzaufwendig erwiesen, da sie relativ weit ins Innere des inneren Teleskopelements hineinragen.

Aufgabe der vorliegenden Erfindung ist es, eine verbesserte Rasteinrichtung und eine verbesserte längenverstellbare Stütze mit einer Rasteinrichtung bereitzustellen.

### ZUSAMMENFASSUNG DER ERFINDUNG

Die vorliegende Erfindung stellt eine längenverstellbare Stütze nach dem Gegenstand des unabhängigen Anspruch 1 bereit.

Weitere Aspekte und Merkmale der Erfindung ergeben sich aus den abhängigen Ansprüchen, der beigefügten Zeichnung und der nachfolgenden Beschreibung bevorzugter Ausführungsbeispiele.

### KURZBESCHREIBUNG DER ZEICHNUNG

Ausführungsbeispiele der Erfindung werden nun beispielhaft und unter Bezugnahme auf die beigefügte Zeichnung beschrieben, in der:
Fig. 1 ein Ausführungsbeispiel einer längenverstellbaren Stütze mit einer Rasteinrichtung in einer Explosionsdarstellung zeigt;
Fig. 2 eine dreidimensionale Ansicht der Rasteinrichtung darstellt;
Fig. 3 eine horizontale Querschnittsansicht durch die Rasteinrichtung zeigt;
Fig. 4 eine weitere dreidimensionale Ansicht der Rasteinrichtung darstellt; und
Fig. 5 eine dreidimensionale Gesamtansicht der Stütze darstellt.

### BESCHREIBUNG DER BEVORZUGTEN AUSFÜHRUNGSBEISPIELE

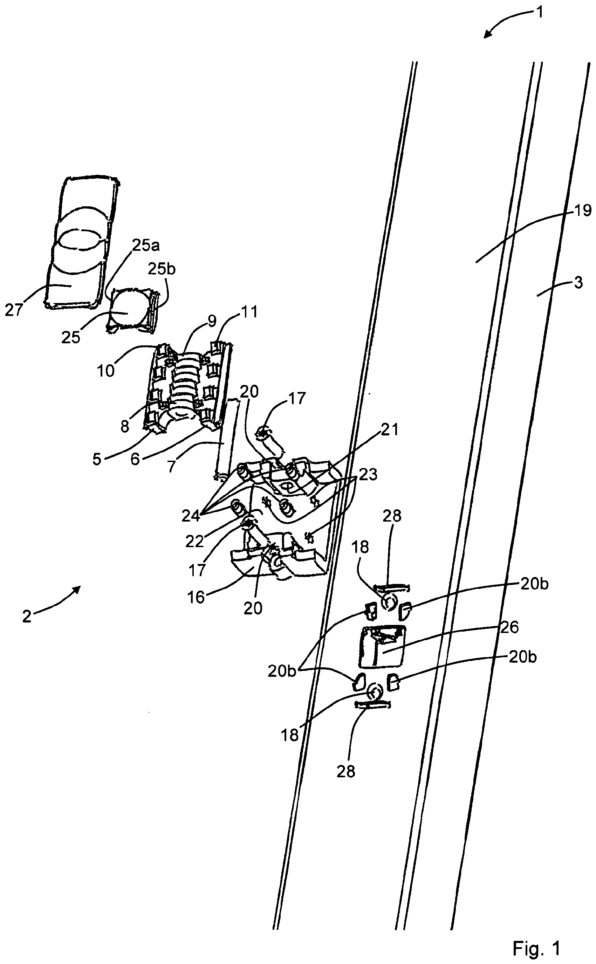

Fig. 1 veranschaulicht ein Ausführungsbeispiel einer längenverstellbaren Stütze 1 der vorliegenden Erfindung, die bspw. für eine Höhenverstellung eines Tisches oder dergleichen vorgesehen ist, ohne, dass die vorliegende Erfindung in dieser Hinsicht beschränkt ist. Vor einer detaillierten Beschreibung bevorzugter Ausführungsbeispiele, folgen zunächst allgemeine Erläuterungen zu den Ausführungsbeispielen und deren Vorteile.

Wie eingangs erwähnt, sind allgemein Stützen bzw. Trägerelemente für Möbel bekannt, die auf unterschiedliche Art und Weise höhenverstellbar bzw. längenverstellbar sind. Zum Beispiel gibt es höhenverstellbare Tische oder verschiebbare Auflageflächen, Beistellflächen und dergleichen auf die sich manche Ausführungsbeispiele beziehen.

Zur Höhen- bzw. Längsverstellung sind zum Beispiel Rasteinrichtungen bekannt, die teleskopartig ineinander geschobene Stützelemente durch entsprechendes Einrasten in Raststrukturen sicher miteinander verbinden, sodass sie eine vorgegebenen Höhe bzw. Länge einnehmen.

Wie eingangs erwähnt, ist eine Rasteinrichtung dieses Typs zum Verrasten eines inneren und eines äußeren Teleskopelements zum Beispiel aus der europäischen Patentschrift EP 2 080 447 B1 bekannt. Die Rasteinrichtung hat einen Rastschuh mit Rastvorsprüngen, die in Rastaussparungen des inneren Teleskopelements einrasten. Zum Lösen der Rastverbindung kann der Rastschuh durch Betätigen eines Betätigungselements aus den Rastaussparungen gedrückt werden. Bei der eingangs erwähnten ähnlichen Rasteinrichtung der deutschen Gebrauchsmusterschrift DE 20 2013 004 212 U1 kann ein Rastschuh mit Rastvorsprüngen durch Ziehen an einem Betätigungselement aus Rastvorsprüngen in dem inneren Teleskopelement entfernt werden, wodurch die Rastverbindung zwischen dem inneren und dem äußeren Teleskopelement gelöst werden kann.

Beide Rasteinrichtungen benötigen relativ viel Platz im Inneren des inneren Teleskopelements, da entweder ausreichend Platz zum Hineinverschieben des Rastschuhs vorhanden sein muss (z. B. EP 2 080 447 B1) oder ausreichend Platz für ein Federelement vorhanden sein muss, das den Rastschuh in den Rastaussparungen hält (z. B. DE 20 2013 004 212 U1).

Dementsprechend betreffen die Ausführungsbeispiele eine längenverstellbare Stütze für Möbel mit einer Rasteinrichtung zum Arretieren der längenverstellbaren Stütze, wobei die Rasteinrichtung einen ersten Rastabschnitt zum Eingreifen in ein Raster der längenverstellbaren Stütze umfasst und einen zweiten Rastabschnitt zum Eingreifen in das Raster der längenverstellbaren Stütze, wobei der erste und der zweite Rastabschnitt an einer Längsachse drehbar zueinander ausgestaltet sind.

Die längenverstellbare Stütze weist ein äußeres und ein inneres Stützelement auf, wobei das innere Stützelement teleskopartig in dem äußeren Stützelement bewegbar ist.

Der Querschnitt der Stütze kann jede beliebige Form aufwiesen, wie eckig, rund, oval oder dergleichen.

Die längenverstellbare Stütze ist typischerweise aus einem festen und harten Material gefertigt, wie es für Stützen für Möbel bekannt ist, wie bspw. Metall (Stahl, Aluminium oder dergleichen), Kunststoff oder dergleichen.

Der erste und der zweite Rastabschnitt können symmetrisch ausgestaltet sein und ebenfalls aus einem festen, harten Material gefertigt sein, wie Metall, Kunststoff oder dergleichen. Außerdem können auch mehr als zwei Rastabschnitte vorgesehen sein. Das Raster in der längenverstellbaren Stütze ist bspw. in dem inneren (und/oder äußeren) Stützelement vorgesehen und es weist Löcher, Vertiefungen, Erhebungen oder andere Strukturen auf, in die der erste bzw. zweite Rastabschnitt eingreifen kann und die längenverstellbare Stütze arretieren kann, sodass bspw. das innere Stützelement nicht in Bezug auf das äußere Stützelement bewegbar ist und so die Stütze ihre Stützfunktion, bspw. für einen Tisch, eine Ablagefläche oder dergleichen ausüben kann.

Zum Eingreifen in das Raster können der erste bzw. zweite Rastabschnitt eine oder mehrere Strukturen aufweisen, die so gestaltet sind, dass sie in die Strukturen des Rasters eingreifen können. Weist das Raster bspw. Aussparungen oder Löcher auf, so können der erste bzw. zweite Rastabschnitt Erhebungen aufweisen, die so gestaltet sind, dass sie in die Aussparungen bzw. Löcher eingreifen (oder umgekehrt, wenn bspw. das Raster Erhebungen aufweist, so können der erste bzw. zweite Rastabschnitt entsprechend Löcher, Vertiefungen oder Aussparungen zum Eingreifen aufweisen).

Der erste und der zweite Rastabschnitt können als getrennte Elemente vorgesehen sein, die bspw. nur an der als Drehachse ausgestalteten Längsachse miteinander verbunden oder gekoppelt sind. Bei anderen Ausführungsbeispielen können der erste und zweite Rastabschnitt auch Bestandteile eines Raststücks sein und die Längsachse ist bspw. als ein elastischer Bereich vorgesehen, an dem der erste und zweite Rastabschnitt gegeneinander gedreht (geschenkt) werden können.

Dadurch, dass der erste und der zweite Rastabschnitt drehbar zueinander um die Längsachse sind, benötigen sie bei manchen Ausführungsbeispielen wenig Platz, um aus dem Eingriff in das Raster entfernt zu werden. Der erste und der zweite Rastabschnitt können im Inneren des inneren Stützelements angeordnet sein und von innen in das Raster des inneren Stützelements eingreifen.

Der erste und der zweite Rastabschnitt können auch mit einem Stift drehbar um die Längsachse miteinander gekoppelt sein. Dazu können der erste und der zweite Rastabschnitt jeweils eine oder mehrere Führungen aufweisen, durch die sich der Stift hindurch erstreckt. Der Stift kann aus einem Metall, Kunststoff oder dergleichen gefertigt sein.

Die Rasteinrichtung umfasst ein Gehäuse, das zur Befestigung an der längenverstellbaren Stütze vorgesehen ist. Das Gehäuse kann aus einem festen Material, wie Metall, Kunststoff oder dergleichen gefertigt sein. Das Gehäuse ist erfindungsgemäß an dem äußeren Stützelement befestigt. Der erste und der zweite Rastabschnitt können in dem Gehäuse angeordnet sein. Das heißt, bei manchen Ausführungsbeispielen ist das Gehäuse im Inneren des inneren Stützelements angeordnet. Der erste und der zweite Rastabschnitt können auch drehbar um die Längsachse in dem Gehäuse gelagert sein. Zum Beispiel kann der oben genannte Stift in Halterungen in dem Gehäuse gehalten werden. Dadurch, dass der erste und der zweite Rastabschnitt in dem Gehäuse gehalten werden und das inneren Stützelement halten und dadurch, dass das Gehäuse mit dem äußeren Stützelement fest verbunden ist, kann folglich, wenn der erste und der zweite Rastabschnitt in das Raster eingreifen, das innere und das äußere Stützelement arretiert werden.

Erfindungsgemäß umfasst die Rasteinrichtung wenigstens ein Federelement, das eine Kraft auf den ersten und/oder zweiten Rastabschnitt in Richtung einer Raststellung ausübt, in welcher der erste bzw. zweite Rastabschnitt in das Raster eingreift. Das Federelement kann eine Spiralfeder, Blattfeder oder dergleichen sein. Sind der erste und zweite Rastabschnitt im Inneren des inneren Stützelements angeordnet, so ist die Richtung der Federkraft bspw. in Richtung des äußeren Stützelements und derart, dass sie den ersten und den zweiten Rastabschnitt von innen gegen das Raster drückt, ohne, dass die vorliegende Erfindung auf dieses Ausführungsbeispiel beschränkt ist. Bei manchen Ausführungsbeispielen ist für jeden Rastabschnitt (wenigstens) ein Federelement vorgesehen.

Das wenigstens eine Federelement kann an einem Boden des Gehäuses angeordnet sein. Der Boden des Gehäuses kann bspw. parallel zur Innenwand des inneren Stützelements angeordnet sein. Das wenigstens eine Federelement kann senkrecht auf dem Boden des Gehäuses angeordnet sein, sodass die Federkraft auf den ersten bzw. zweiten Rastabschnitt im Wesentlichen senkrecht in Richtung zur Innenwand des inneren Stützelements gerichtet ist und dadurch den ersten bzw. den zweiten Rastabschnitt gegen das Raster drückt und so die Stütze arretiert.

Bei manchen Ausführungsbeispielen umfasst die Rasteinrichtung ein Betätigungselement, das zum Betätigen des ersten und/oder zweiten Rastabschnitts vorgesehen ist. Das Betätigungselement kann aus einem festen Material gebildet sein, wie Metall oder Kunststoff oder dergleichen. Das Betätigungselement kann einen ersten Abschnitt aufweisen, der beim Betätigen Kraft auf den ersten Rastabschnitt ausübt, und es kann einen zweiten Abschnitt aufweisen, der beim Betätigen Kraft auf den zweiten Rastabschnitt ausübt. Durch Betätigen des Betätigungselements kann der Eingriff des ersten bzw. zweiten Rastabschnitts in das Raster und damit auch die Arretierung gelöst werden, wodurch die Stütze in ihrer Länge verändert werden kann.

Die Erfindung betrifft eine längenverstellbare Stütze für Möbel, die, wie auch schon oben ausgeführt, ein äußeres Stützelement und ein inneres Stützelement umfasst, das teleskopartig in dem äußeren Stützelement bewegbar ist, wobei das innere Stützelement ein Raster aufweist. Außerdem umfasst die Stütze eine Rasteinrichtung, wie sie hierin und auch oben beschrieben ist, zum Arretieren des inneren Stützelements an dem äußeren Stützelement.

Wie beschrieben, weist die Rasteinheit einen ersten Rastabschnitt zum Eingreifen in das Raster des inneren Stützelements auf und sie weist einen zweiten Rastabschnitt zum Eingreifen in das Raster des inneren Stützelements auf, wobei der erste und der zweite Rastabschnitt an einer Längsachse drehbar zueinander ausgestaltet sind. Das Raster kann in einem länglichen Ausschnitt einer Seite des inneren Stützelements ausgebildet sein. Wie oben ausgeführt, kann das Raster Aussparungen, Löcher, Erhebungen oder dergleichen aufweisen. Bei manchen Ausführungsbeispielen ist das Raster als zinnenartige Strukturen, z. B. als Zinnenraster, an den langen Rändern des länglichen Ausschnitts ausgebildet, ohne, dass die vorliegende Erfindung auf dieses konkrete Ausführungsbeispiel beschränkt ist.

Der erste und der zweite Rastabschnitt können innerhalb des inneren Stützelements angeordnet sein, wie es oben ausgeführt wurde.

Wie oben ausgeführt, weist die Rasteinrichtung ein Gehäuse auf, das an dem äußeren Stützelement befestigt ist. Wenn das Gehäuse innerhalb des inneren Stützelements angeordnet ist, kann die Befestigung durch den länglichen Ausschnitt hindurch an dem äußeren Stützelement befestigt sein, sodass die Befestigung nicht die Bewegung des inneren Stützelements im äußeren Stützelement behindert.

Wie oben ausgeführt, ist weiter wenigstens ein Federelement vorgesehen, das eine Kraft auf den ersten und/oder zweiten Rastabschnitt in Richtung einer Raststellung ausübt, in welcher der erste bzw. zweite Rastabschnitt in das Raster eingreift, wobei das wenigstes eine Federelement an einem Boden des Gehäuses angeordnet sein kann.

Wie ausgeführt, können der erste und der zweite Rastabschnitt mit einem Stift drehbar um die Längsachse miteinander gekoppelt sein.

Wie ausgeführt, kann weiter ein Betätigungselement vorgesehen sein, das zum Betätigen des ersten und/oder zweiten Rastabschnitts vorgesehen ist.

Das Betätigungselement kann in einer Aussparung des äußeren Stützelements angeordnet sein. Dabei kann das Betätigungselement durch die Aussparung hindurch eine Kraft auf den ersten bzw. zweiten Rastabschnitt ausüben, sodass der erste bzw. zweite Rastabschnitt in Reaktion auf die ausgeübte Kraft die Arretierung löst.

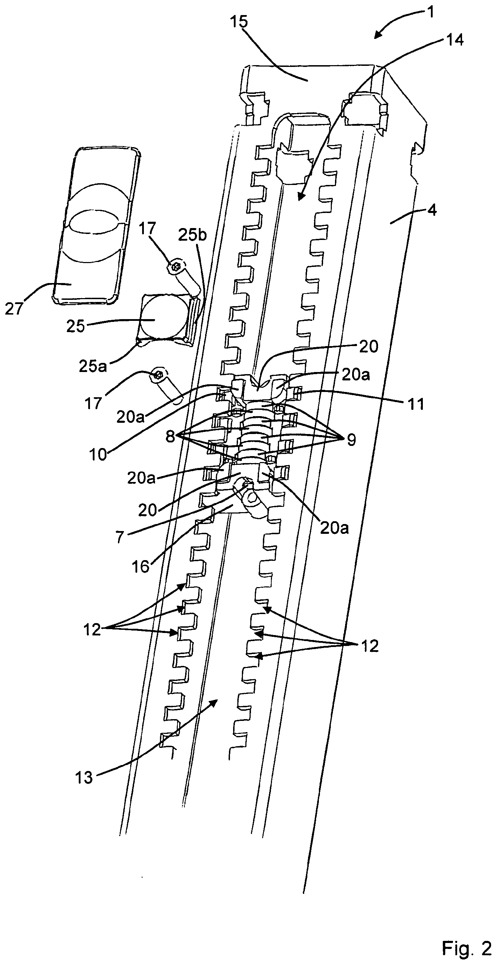

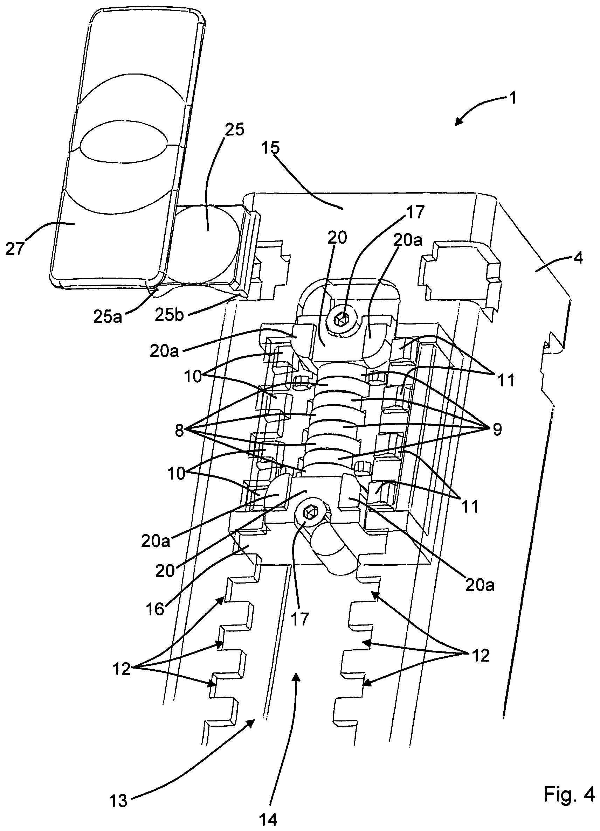

Zurückkehrend zu den Fig. 1 bis 5, ist dort ein Ausführungsbeispiel einer längenverstellbaren Stütze 1 mit einem Ausführungsbeispiel einer Rasteinrichtung 2 veranschaulicht.

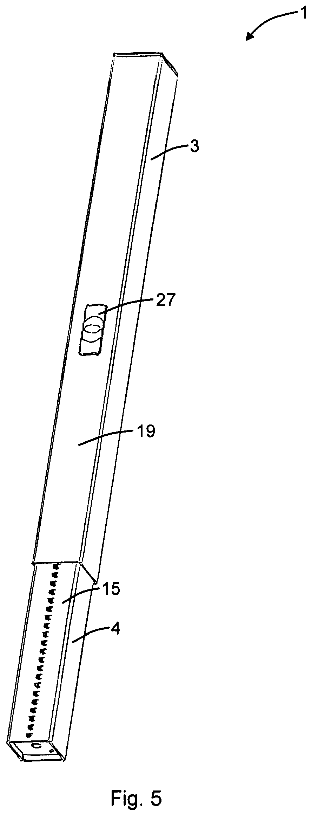

Die Stütze 1 ist bspw. für einen höhenverstellbaren Tisch vorgesehen und sie hat ein äußeres Stützelement 3 und ein inneres Stützelement 4, das teleskopartig in dem äußeren Stützelement 3 verschoben werden kann (siehe auch Fig. 5).

Die Stütze 1 und folglich das äußere 3 und das innere Stützelement 4 sind hohl und haben einen nahezu quadratischen Querschnitt, wobei der Querschnitt des inneren Stützelements 4 einen kleineren Durchmesser als der Querschnitt des äußeren Stützelements 3 hat, sodass es in dem Inneren des äußeren Stützelements 4 angeordnet werden kann.

Zur Lagerung des inneren Stützelements 4 im äußeren Stützelement 3 können Kugellager, Gleitlager oder dergleichen vorgesehen sein, die zwischen dem inneren Stützelement 4 und dem äußeren Stützelement 3 vorgesehen sein können.

Die Rasteinrichtung 2 hat einen ersten Rastabschnitt 5 und einen zweiten Rastabschnitt 6, die drehbar um eine Längsachse sind, wobei die Längsachse durch einen Stift 7 gebildet ist. Der erste 5 bzw. zweite Rastabschnitt 6 sind hier als Kunststoffteile gebildet.

Der erste Rastabschnitt 5 hat vier scheibenartige und zueinander beabstandete Fortsätze 8, die jeweils eine kreisrunde Öffnung mit einem Durchmesser haben, der dem Durchmesser des Stifts 7 angepasst ist. Die Fortsätze 8 sind parallel zueinander angeordnet und bspw. integral in dem ersten Rastabschnitt 5 ausgebildet.

Der zweite Rastabschnitt 6 hat auf ähnliche Art und Weise ebenfalls vier scheibenartige und zueinander beabstandete Fortsätze 9, die jeweils eine kreisrunde Öffnung mit einem Durchmesser haben, der dem Durchmesser des Stifts 7 angepasst ist. Die Fortsätze 9 sind parallel zueinander angeordnet und bspw. integral in dem zweiten Rastabschnitt 5 ausgebildet.

Die Fortsätze 8 des ersten Rastabschnitts 5 und die Fortsätze 9 des zweiten Rastabschnitts 6 sind derart zueinander beabstandet, dass sie jeweils in die Zwischenräume zwischen zwei Fortsätze passen. Zum Beispiel passt ein Fortsatz 8 in den Zwischenraum zweier Fortsätze 9 (und umgekehrt, also ein Fortsatz 9 in den Zwischenraum zweier Fortsätze 8).

Dementsprechend erstreckt sich der Stift 7 durch alle Fortsätze 8 des ersten Rastabschnitts 5 und durch alle Forstätze 9 des zweiten Rastabschnitts 6 und koppelt auf diese Art und Weise den ersten Rastabschnitt 5 mit dem zweiten Rastabschnitt 6, wobei der Stift 7 eine längliche Drehachse bildet (siehe auch Fig. 1).

Außerdem hat jeder Rastabschnitt 5, 6 eine Reihe von vier Rastvorsprüngen 10 bzw. 11, die in entsprechende Aussparungen 12 eines (Zinnen-)Rasters 13 eingreifen können, das in einer Aussparung 14 einer Wand 15 des inneren Stützelements 4 angeordnet sind. Die Aussparungen 12 sind regelmäßig vorgesehen und bspw. in einem Abstand angeordnet, dass eine Längenverstellung in Zentimeterschritten möglich ist. Greifen die Rastvorsprünge 10 in die Aussparungen 12 ein, so ist das innere Stützelement 4 arretiert und kann nicht mehr gegenüber dem äußeren Stützelement 3 verschoben werden.

Die Rasteinheit 2 hat ein Gehäuse 16, das über zwei Schrauben 17 durch entsprechende Löcher 18 in einer Außenwand 19 des äußeren Stützelements an der Innenseite der Außenwand 19 festgeschraubt wird.

Die Verschraubung mit den Schrauben 17 ist dabei derart angeordnet, dass sie innerhalb der Aussparung 14 des inneren Stützelements 4 sitzt, sodass sie nicht die Verschiebung des inneren Stützelements 4 behindert.

Das Gehäuse 16 hat zwei gegenüberliegende Abstützbacken 20, die Vorsprünge 20a an der Oberseite haben, die wiederum an das äußere Stützelement 3 angepasst sind und dadurch Scherkräfte aufnehmen können, dass sie in entsprechende Aussparungen 20b eingreifen, die an der Außenwand 19 des äußeren Stützelements 3 vorgesehen sind.

In jeder Abstützbacke 20 ist eine Bohrung 21 vorgesehen, in der der Stift 7 angeordnet werden kann und dadurch in den Abstützbacken 20 gehalten werden kann.

Am Boden 22 des Gehäuses 16 sind vier Stifte 23 vorgesehen, an denen jeweils eine Feder 24 angeordnet und gehalten werden kann. Die Stifte 23 erstrecken sich senkrecht von dem Boden 22 weg, sodass sich die an ihnen angeordneten Federn 24 ebenfalls senkrecht vom Boden weg erstrecken und in dieser Position von den Stiften 23 gehalten werden.

Jeweils zwei der vier Federn 24 sind so angeordnet, dass sie gegen die Unterseite der ersten 5 bzw. zweiten Rastabschnitts 6 drücken und so den ersten 5 und zweiten Rastabschnitt 6 in eine Rastposition drücken, in der die Rastvorsprünge 10 bzw. 11 in das Raster 13 eingreifen (verrasten) und die Stütze 1 arretieren.

Zum Lösen der Arretierung ist ein Betätigungselement 25 (auch Auslösung genannt) vorgesehen, das eine im Wesentlichen quadratische Form hat und aus Kunststoff gefertigt ist. An seiner Unterseite hat das Betätigungselement zwei gegenüberliegende Vorsprünge 25a und 25b, die jeweils auf die Oberseite des ersten 5 bzw. zweiten Rastabschnitts 6 drücken können.

Das Betätigungselement 25 ist in einer entsprechenden Aussparung 26 an der Außenwand 19 des äußeren Stützelements 3 angeordnet und liegt im Wesentlichen lose in dieser Aussparung 26.

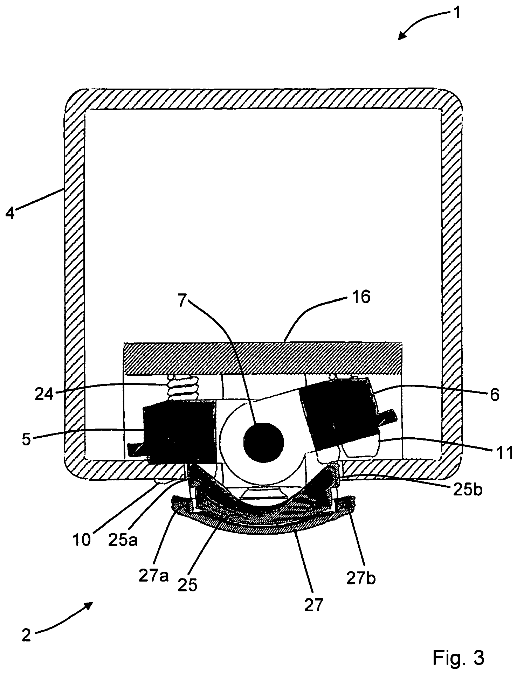

Gehalten wird das Betätigungselement 25 von einer Abdeckmembrane 27, die aus elastischen Kunststoff (z. B. Shore 80) gefertigt ist. Die Abdeckmembrane 27 hat zwei gegenüberliegende Vorsprünge (nicht gezeigt) an ihren kurzen Enden, die in zwei entsprechende gegenüberliegende Schlitze 28 in der Außenwand 19 des äußeren Stützelements einrasten können. Außerdem hat die Abdeckmembrane 27 eine Führung, die durch gegenüberliegende Stege 27a und 27b gebildet ist (Fig. 3), welche das Betätigungselement 25 führt.

Die Abdeckmembrane 27 drückt folglich im befestigten Zustand mit ihrer Unterseite auf die Oberseite des Betätigungselements 25 und hält es dadurch in der Aussparung 26, während die Vorsprünge 25a und 25b auf die Oberseite des ersten 5 bzw. zweiten Rastabschnitts 6 drücken. Mit anderen Worten ist das Betätigungselement 25 zwischen der Abdeckmembrane 27 und dem ersten 5 und dem zweiten Rastabschnitt 6 eingeklemmt.

Zum Lösen der Arretierung bzw. zum Entrasten, kann ein Nutzer durch die Abdeckmembrane 27 auf das Betätigungselement 25 drücken, wobei er eine Kraft in Richtung ins Innere des äußeren 3 und inneren Stützelements 4 ausübt.

Dadurch drückt der Vorsprung 25a auf den ersten Rastabschnitt 5 und der Vorsprung 25b drückt auf den zweiten Rastabschnitt 6.

Der erste 5 und zweite Rastabschnitt 6 drücken jeweils auf die zwei unter ihnen liegenden Federn 24, welche entsprechend nachgeben, sodass sich der erste 5 und der zweite Rastabschnitt 6 um die Längsachse drehen, die durch den sie koppelnden Stift 7 gebildet wird.

Dadurch bewegen sich der erste 5 und der zweite Rastabschnitt 6 in Richtung nach innen, sodass sich die zugehörigen Rastvorsprünge 10 und 11 aus den Aussparungen 12 herausbewegen und folglich die Arretierung lösen.

Die auf das Betätigungselement 25 wirkenden Kräfte werden über den ersten 5 und den zweiten Rastabschnitt 6 und über die Federn 24 auf den Boden 22 des Gehäuses 16 übertragen. Da das Gehäuse über die Schrauben 17 mit dem äußeren Stützelement 3 fest verschraubt ist, wirkt es dementsprechend den auf das Betätigungselement 25 wirkenden Kräften entgegen, sodass die Arretierung wie beschrieben gelöst wird.

Manche Ausführungsbeispiele sind folglich kostengünstig, einfach herstellbar durch Formteile in Kunststoff, sind schnell und einfach montierbar bzw. vormontierbar, sind dauerhaft funktionssicher, haben einen geringen Verschleiß und/oder erlauben eine kleine, kompakte Bauweise. Außerdem kann die Rasteinheit einfach an verschiedene Rohrformen angepasst werden.

## Patentansprüche

1. Längenverstellbare Stütze für Möbel, umfassend:
ein äußeres Stützelement (3) und ein inneres Stützelement (4), das teleskopartig in dem äußeren Stützelement bewegbar ist, wobei das innere Stützelement (4) ein Raster (13) aufweist, und
eine Rasteinrichtung (2) zum Arretieren des inneren Stützelements (4) an dem äußeren Stützelement (3),
wobei die Rasteinrichtung (2) aufweist:
ein Gehäuse (16), das an dem äußeren Stützelement (3) befestigt ist,
einen ersten Rastabschnitt (5) zum Eingreifen in das Raster (13) des inneren Stützelements (4),
einen zweiten Rastabschnitt (6) zum Eingreifen in das Raster (13) des inneren Stützelements (4), wobei der erste und der zweite Rastabschnitt (5, 6) um eine Längsachse (7) drehbar zueinander gekoppelt sind, und
wenigstens ein Federelement (24), das eine Kraft auf den ersten und/oder zweiten Rastabschnitt (5, 6) in Richtung einer Raststellung ausübt, in der der erste bzw. zweite Rastabschnitt (5, 6) in das Raster (13) eingreift.

2. Längenverstellbare Stütze nach Anspruch 1, wobei das Raster (13) in einem länglichen Ausschnitt (14) einer Seite (15) des inneren Stützelements (4) ausbildet ist.

3. Längenverstellbare Stütze nach Anspruch 1 oder 2, wobei der erste und der zweite Rastabschnitt (5, 6) innerhalb des inneren Stützelements (3) angeordnet sind.

4. Längenverstellbare Stütze nach einem der Ansprüche 1 bis 3, wobei das wenigstes eine Federelement (24) an einem Boden (22) des Gehäuses (16) angeordnet ist.

5. Längenverstellbare Stütze nach einem der Ansprüche 1 bis 4, wobei der erste und der zweite Rastabschnitt (5, 6) mit einem Stift (7) drehbar um die Längsachse miteinander gekoppelt sind.

6. Längenverstellbare Stütze nach einem der Ansprüche 1 bis 5, weiter ein Betätigungselement (25) umfassend, das zum Betätigen des ersten und/oder zweiten Rastabschnitts (5, 6) vorgesehen ist.

7. Längenverstellbare Stütze nach Anspruch 6, wobei das Betätigungselement (25) in einer Aussparung (26) des äußeren Stützelements (3) angeordnet ist.

## Claims

1. Length-adjustable support for furniture, comprising:
an outer supporting element (3) and an inner supporting element (4) which is telescopically movable in the outer supporting element, wherein the inner supporting element (4) has a latching arrangement (13), and
a latching device (2) for arresting the inner supporting element (4) on the outer supporting element (3),
wherein the latching device (2) has:
a housing (16) which is fastened to the outer supporting element (3),
a first latching portion (5) for engaging in the latching arrangement (13) of the inner supporting element (4),
a second latching portion (6) for engaging in the latching arrangement (13) of the inner supporting element (4), wherein the first and the second latching portion (5, 6) are coupled to one another so as to be rotatable about a longitudinal axis (7), and
at least one spring element (24) which exerts a force on the first and/or second latching portion (5, 6) in the direction of a latching position in which the first or second latching portion (5, 6) engages in the latching arrangement (13).

2. Length-adjustable support according to Claim 1, wherein the latching arrangement (13) is formed in an elongate cutout (14) in a side (15) of the inner supporting element (4).

3. Length-adjustable support according to Claim 1 or 2, wherein the first and the second latching portion (5, 6) are arranged within the inner supporting element (3).

4. Length-adjustable support according to one of Claims 1 to 3, wherein the at least one spring element (24) is arranged on a base (22) of the housing (16).

5. Length-adjustable support according to one of Claims 1 to 4, wherein the first and the second latching portion (5, 6) are coupled to one another by a pin (7) so as to be rotatable about the longitudinal axis.

6. Length-adjustable support according to one of Claims 1 to 5, further comprising an actuating element (25) which is intended to actuate the first and/or second latching portion (5, 6).

7. Length-adjustable support according to Claim 6, wherein the actuating element (25) is arranged in an aperture (26) of the outer supporting element (3).

## Revendications

1. Support réglable en longueur pour des meubles, comprenant :
un élément de support extérieur (3) et un élément de support intérieur (4) qui est mobile de manière télescopique dans l'élément de support extérieur, dans lequel l'élément de support intérieur (4) présente une grille (13), et
un dispositif d'encliquetage (2) pour l'arrêt de l'élément de support intérieur (4) sur l'élément de support extérieur (3),
dans lequel le dispositif d'encliquetage (2) présente :
un boîtier (16) qui est fixé sur l'élément de support extérieur (3),
une première section d'encliquetage (5) pour la mise en prise dans la grille (13) de l'élément de support intérieur (4),
une seconde section d'encliquetage (6) pour la mise en prise dans la grille (13) de l'élément de support intérieur (4), dans lequel la première et la seconde section d'encliquetage (5, 6) sont accouplées l'une à l'autre de manière à pouvoir tourner autour d'un axe longitudinal (7), et
au moins un élément de ressort (24) qui exerce une force sur la première et/ou la seconde section d'encliquetage (5, 6) en direction d'une position d'encliquetage, dans laquelle la première ou seconde section d'encliquetage (5, 6) vient en prise dans la grille (13).

2. Support réglable en longueur selon la revendication 1, dans lequel la grille (13) est réalisée dans une entaille oblongue (14) d'un côté (15) de l'élément de support intérieur (4).

3. Support réglable en longueur selon la revendication 1 ou 2, dans lequel la première et la seconde section d'encliquetage (5, 6) sont agencées dans l'élément de support intérieur (3).

4. Support réglable en longueur selon l'une quelconque des revendications 1 à 3, dans lequel l'au moins un élément de ressort (24) est agencé sur un fond (22) du boîtier (16).

5. Support réglable en longueur selon l'une quelconque des revendications 1 à 4, dans lequel la première et la seconde section d'encliquetage (5, 6) sont accouplées l'une à l'autre avec une tige (7) de manière à pouvoir tourner autour de l'axe longitudinal.

6. Support réglable en longueur selon l'une quelconque des revendications 1 à 5, comprenant en outre un élément d'actionnement (25), qui est prévu pour l'actionnement de la première et/ou seconde section d'encliquetage (5, 6).

7. Support réglable en longueur selon la revendication 6, dans lequel l'élément d'actionnement (25) est agencé dans un évidement (26) de l'élément de support extérieur (3).
